# EUROPEAN PATENT APPLICATION

(11) **EP 4 832 368 A1**
(43) Date of publication of application: **28.10.2026**
(21) Application number: 24918357.5
(22) Date of filing: 27.12.2024
(51) Int. Cl.: H04B 7/0456, H04L 5/00

(54) **COMMUNICATION METHODS AND RELATED DEVICE**

(30) Priority: 18.01.2024 CN 202410077620
(71) Applicant: Huawei Technologies Co., Ltd., Shenzhen, Guangdong 518129 (CN)
(72) Inventor: HU, Chen, Shenzhen, Guangdong 518129 (CN); JIANG, Hao, Shenzhen, Guangdong 518129 (CN); CAI, Shijie, Shenzhen, Guangdong 518129 (CN); GAO, Xiang, Shenzhen, Guangdong 518129 (CN); DONG, Changzhao, Shenzhen, Guangdong 518129 (CN); LIU, Kunpeng, Shenzhen, Guangdong 518129 (CN)
(74) Representative: Pfenning, Meinig & Partner mbB
(86) International application number: PCT/CN2024/142970
(87) International publication number: WO 2025/152749

(57) **Abstract**

Embodiments of this application provide a communication method and a related device. The method is performed by a first device, or the method is performed by some components (for example, a processor, a chip, or a chip system) in the first device, or the method may be implemented by a logical module or software that can implement all or some functions of the first device. In the method, the first device first determines indication information, and then sends the indication information. The indication information is used to indicate an association relationship between a first demodulation reference signal (demodulation reference signal, DMRS) transmitted on a first precoding resource block group (precoding resource block group, PRG) and a data stream on a second PRG, where the first PRG and the second PRG are different PRGs. The association relationship between the first DMRS transmitted on the first PRG and the data stream on the second PRG is indicated by using the indication information. That is, the data stream on the second PRG may multiplex the first DMRS on the first PRG, thereby reducing DMRS overheads on the second PRG, and thereby supporting a larger quantity of data streams.

## Description

This application claims priority to Chinese Patent Application No. 202410077620.9, filed with the China National Intellectual Property Administration on January 18, 2024, and entitled "Communication Method and Related Devices," which is incorporated herein by reference in its entirety.

### Technical Field

This application relates to the field of wireless technologies, and in particular, to a communication method and related devices.

### Background

Wireless communication may refer to the transmission of communication between two or more communication nodes without the use of conductors or cables, or through an air interface. For example, these communication nodes include network devices and terminal devices. Generally, a terminal device can access a network device and receive scheduling and instruction information from the network device to achieve wireless communication.

Currently, in multiple-input multiple-output (MIMO) systems, multi-stream transmission is performed simultaneously. To assist the receiver side in accurately estimating the channel or equivalent channel of each stream, multiple demodulation reference signal (DMRS) resources are configured for transmitting DMRS on multiple ports, where the number of DMRS ports is equal to the number of streams. With the continuous evolution of massive MIMO (mMIMO), the antenna scale of both base stations and terminals continues to increase, the number of transmission streams continues to rise, and the demand for DMRS capacity expansion also continues to grow.

Therefore, how to increase the number of data streams without increasing the overhead of DMRS resources is an urgent technical problem to be resolved.

### Summary of the Invention

This application provides a communication method and related devices, where a higher number of data streams can be supported through DMRS multiplexing.

A first aspect of this application provides a communication method, where the method is performed by a first device, or the method is performed by some components (for example, a processor, a chip, or a chip system) in the first device, or the method may be implemented by a logical module or software that can implement all or some functions of the first device. In the first aspect and its possible implementations, an example in which the method is performed by the first device is used for description. In the method, the first device first determines indication information, then sends the indication information, and transmits a data stream based on an association relationship. The indication information is used to indicate an association relationship between a first demodulation reference signal DMRS transmitted on a first precoding resource block group (precoding resource block group, PRG) and a data stream on a second PRG. The indication information may also be understood as that the first DMRS transmitted on the first PRG is used for channel estimation of the data stream on the second PRG, where the first PRG and the second PRG are different PRGs.

Based on the foregoing solution, the association relationship between the first DMRS transmitted on the first PRG and the data stream on the second PRG is indicated by using the indication information. That is, the data stream on the second PRG may reuse the first DMRS on the first PRG, so that a larger quantity of data streams can be supported on the second PRG at a lower DMRS overhead, thereby increasing a data volume transmitted on the second PRG.

A second aspect of this application provides a communication method. The method is performed by a second device, or the method is performed by some components (for example, a processor, a chip, or a chip system) in the second device, or the method may alternatively be implemented by a logical module or software that can implement all or some functions of the second device. In the first aspect and the possible implementations of the first aspect, an example in which the method is performed by the second device is used for description. In the method, the second device receives the indication information, and transmits a data stream based on an association relationship. The indication information is used to indicate an association relationship between the first DMRS transmitted on the first PRG and a data stream on the second PRG. The indication information may also be understood as that the first DMRS transmitted on the first PRG is used for channel estimation of the data stream on the second PRG, where the first PRG and the second PRG are different PRGs.

Based on the foregoing solution, the association relationship between the first DMRS transmitted on the first PRG and the data stream on the second PRG is indicated by using the indication information. That is, the data stream on the second PRG may reuse the first DMRS on the first PRG, so that a larger quantity of data streams can be supported on the second PRG at a lower DMRS overhead, thereby increasing a data volume transmitted on the second PRG.

Optionally, in a possible implementation of the first aspect or the second aspect, the method further includes: transmitting the data stream based on the indication information.

In this possible implementation, the first device and the second device may multiplex DMRSs on different PRGs, so that a larger quantity of data streams can be supported on the second PRG at a lower DMRS overhead, thereby increasing a data volume transmitted on the second PRG.

Optionally, in a possible implementation of the first aspect or the second aspect, the first PRG is used to transmit N first data streams and the first DMRS; the second PRG is used to transmit M second data streams; the first DMRS is used for channel estimation of all or some of the N first data streams, the first DMRS is further used for channel estimation of the M second data streams, and N and M are positive integers.

In this possible implementation, the M second data streams transmitted on the second PRG may reuse the first DMRS transmitted on the first PRG for channel estimation, so that a larger quantity of data streams can be supported on the second PRG at a lower DMRS overhead, thereby increasing a data volume transmitted on the second PRG.

Optionally, in a possible implementation of the first aspect or the second aspect, the first DMRS further has an association relationship with a data stream on the first PRG, and parameters of data streams on different PRGs that have an association relationship with the same DMRS in the first DMRS are the same, where the parameters include at least one of the following: a precoding matrix, an antenna port, or an analog beam.

In this possible implementation, the data streams on different PRGs that have an association relationship with the same DMRS are limited to having the same parameters, thereby reducing interference caused by parameter differences, that is, accuracy of channel estimation can be improved by limiting the data streams to have the same parameters.

Optionally, in a possible implementation of the first aspect or the second aspect, the data streams transmitted on the first PRG and the second PRG are uplink data streams, and the devices that transmits the data streams on different PRGs that have an association relationship with the same DMRS are the same terminal device.

In this possible implementation, it is specified that the device that transmits the data streams on different PRGs having an association relationship with the same DMRS are the same terminal device, thereby ensuring an improvement in channel estimation accuracy in an interaction scenario between a plurality of terminal devices and the network device.

Optionally, in a possible implementation of the first aspect or the second aspect, the second PRG is further configured to transmit a second DMRS and a third data stream, where the second DMRS is used for channel estimation of the third data stream.

In this possible implementation, in addition to transmitting the second data stream multiplexed with the first DMRS, the second PRG may further transmit the third data stream, thereby increasing the total number of data streams.

Optionally, in a possible implementation of the first aspect or the second aspect, the time domain interval between the first PRG and the second PRG is less than or equal to a first threshold, and/or the frequency domain interval between the first PRG and the second PRG is less than or equal to a second threshold.

In this possible implementation, by specifying that the first PRG and the second PRG are relatively close to each other in time domain and/or frequency domain, interference can be reduced, thereby improving channel estimation accuracy.

Optionally, in a possible implementation of the first aspect or the second aspect, the data stream and the first DMRS are carried on an uplink data channel and/or a downlink data channel.

In this possible implementation, this application may be applied not only to an uplink transmission scenario, but also to a downlink transmission scenario.

A third aspect of this application provides a communications apparatus. The apparatus is a first device, or the apparatus is some components (for example, a processor, a chip, or a chip system) in the first device, or the apparatus is a logical module or software that can implement all or some functions of the first device. The communications apparatus includes a transceiver unit and a processing unit. The processing unit is configured to determine indication information, where the indication information is used to indicate an association relationship between a first demodulation reference signal DMRS transmitted on a first precoding resource block group PRG and a data stream on a second PRG; and the transceiver unit is configured to send the indication information, where the first PRG and the second PRG are different PRGs. The transceiver unit is further configured to transmit the data stream based on the association relationship.

A fourth aspect of this application provides a communications apparatus. The apparatus is a second device, or the apparatus is some components (for example, a processor, a chip, or a chip system) in the second device, or the apparatus is a logical module or software that can implement all or some functions of the second device. The communications apparatus includes a transceiver unit. The transceiver unit is configured to receive indication information, where the indication information is used to indicate an association relationship between a first DMRS transmitted on a first PRG and a data stream on a second PRG, where the first PRG and the second PRG are different PRGs. The transceiver unit is further configured to transmit the data stream based on the association relationship.

Optionally, in a possible implementation of the third aspect or the fourth aspect, the transceiver unit is further configured to transmit the data stream based on the indication information.

Optionally, in a possible implementation of the third aspect or the fourth aspect, the first PRG is used to transmit N first data streams and a first DMRS; the second PRG is used to transmit M second data streams; the first DMRS is used for channel estimation of all or some of the N first data streams, the first DMRS is further used for channel estimation of the M second data streams, and N and M are positive integers.

Optionally, in a possible implementation of the third aspect or the fourth aspect, the first DMRS further has an association relationship with a data stream on the first PRG, and parameters of data streams on different PRGs that have an association relationship with the same DMRS in the first DMRS are the same, where the parameters include at least one of the following: a precoding matrix, an antenna port, or an analog beam.

Optionally, in a possible implementation of the third aspect or the fourth aspect, the data streams transmitted on the first PRG and the second PRG are uplink data streams, and the data streams on different PRGs that have an association relationship with the same DMRS are on the same terminal device.

Optionally, in a possible implementation of the third aspect or the fourth aspect, the second PRG is further configured to transmit a second DMRS and a third data stream, where the second DMRS is used for channel estimation of the third data stream.

Optionally, in a possible implementation of the third aspect or the fourth aspect, the time domain interval between the first PRG and the second PRG is less than or equal to a first threshold, and/or a frequency domain interval between the first PRG and the second PRG is less than or equal to a second threshold.

Optionally, in a possible implementation of the third aspect or the fourth aspect, the data stream and the first DMRS are carried on an uplink data channel and/or a downlink data channel.

A fifth aspect of this application provides a communications apparatus, including at least one processor, where the at least one processor is coupled to a memory; the memory is configured to store a program or an instruction; and the at least one processor is configured to execute the program or the instruction, so that the apparatus implements the method according to any one of the possible implementations of the first aspect.

A sixth aspect of this application provides a communications apparatus, including at least one processor, where the at least one processor is coupled to a memory; the memory is configured to store a program or an instruction; and the at least one processor is configured to execute the program or the instruction, so that the apparatus implements the method according to any one of the possible implementations of the second aspect.

A seventh aspect of this application provides a communications apparatus, including at least one logic circuit and an input/output interface; where the logic circuit is configured to perform the method according to any one of the possible implementations of the first aspect.

An eighth aspect of this application provides a communications apparatus, including at least one logic circuit and an input/output interface, where the logic circuit is configured to perform the method according to any one of the possible implementations in the second aspect.

A ninth aspect of this application provides a communications system, where the communications system includes the communications apparatus according to any one of the possible implementations in the fifth aspect and the communications apparatus according to any one of the possible implementations in the sixth aspect, or includes the communications apparatus according to any one of the possible implementations in the seventh aspect and the communications apparatus according to any one of the possible implementations in the eighth aspect.

A tenth aspect of this application provides a computer-readable storage medium, where the storage medium is configured to store one or more computer-executable instructions, and when the computer-executable instructions are executed by a processor, the processor performs the method according to any one of the possible implementations in the first aspect or the second aspect.

An eleventh aspect of this application provides a computer program product (or referred to as a computer program). When a computer program in the computer program product is executed by the processor, the processor performs the method according to any one of the possible implementations in the first aspect or the second aspect.

The twelfth aspect of this application provides a chip or a chip system, where the chip or the chip system includes at least one processor, configured to support a communication apparatus in implementing any one of the possible implementations of the method in any one of the first aspect or the second aspect.

In a possible design, the chip system may further include a memory, where the memory is configured to store program instructions and data necessary for the communication apparatus. The chip system may include a chip, or may include a chip and another discrete component. Optionally, the chip system further includes an interface circuit, where the interface circuit provides program instructions and/or data for the at least one processor.

For technical effects brought by any design manner in the third aspect to the twelfth aspect, refer to technical effects brought by the different design manners in the first aspect and the second aspect. Details are not described herein again.

### Brief Description of the Drawings

FIG. 1A is a schematic diagram of a communications system according to this application;
FIG. 1B is another schematic diagram of a communications system according to this application;
FIG. 1C is another schematic diagram of a communications system according to this application;
FIG. 2 is a schematic flowchart of a communication method according to this application;
FIG. 3 is an example diagram of an arrangement of a PRG in time domain according to this application;
FIG. 4 is an example diagram of an arrangement of a PRG in frequency domain according to this application;
FIG. 5 is an example diagram of a PRG according to this application;
FIG. 6 is another example diagram of a PRG according to this application;
FIG. 7 to FIG. 10 are several schematic diagrams of a communications apparatus according to this application.

### Description of Embodiments

The following clearly and completely describes the technical solutions in embodiments of this application with reference to the accompanying drawings in embodiments of this application.

First, some terms in embodiments of this application are explained and described, so as to facilitate understanding by a person skilled in the art.

Precoding resource block group (precoding resource block group, PRG) or physical resource group (physical resource group, PRG)

The PRG represents a resource area formed by consecutive time domain and/or frequency domain, and a same precoding is used for transmission on the resource area. For example, an example in which the resource area is a resource block is used. The PRG includes a plurality of precoding resource blocks (precoding resource block, PRB).

It should be understood that the PRG and the resource block are names used in current communication systems (this application uses the name of the precoding resource block group as an example for description), and the name of the PRG or the resource area may change with evolution of the communication system in future communication systems.

### 2. Configuration and Pre-configuration

In this application, both configuration and pre-configuration are used. Configuration refers to the process where a network device/server sends configuration information or parameter values of some parameters to a terminal through messages or signaling, so that the terminal can determine communication parameters or resources for transmission based on these values or information. Pre-configuration is similar to configuration; it can be parameter information or parameter values that have been pre-negotiated between the network device/server and the terminal device, or it can be parameter information or parameter values specified by a standard protocol for the base station/network device or the terminal device to use, or it can be parameter information or parameter values that are pre-stored in the base station/server or the terminal device. This application does not impose any limitations on this.

Furthermore, these values and parameters can be variable or updated.

3. In this application, "used for indication" may include both direct indication and indirect indication. When it is described that some indication information is used to indicate A, it may be understood that the indication information carries A, directly indicates A, or indirectly indicates A.

In this application, the information indicated by the indication information is referred to as to-be-indicated information. In the implementation process, there are various ways to indicate the to-be-indicated information. For example, it may be implemented through direct indication, such as by indicating the to-be-indicated information itself or by using an index of the to-be-indicated information. Alternatively, it may be implemented through indirect indication by indicating other information, where there is an association relationship between the other information and the to-be-indicated information. It is also possible to indicate only a part of the to-be-indicated information, while the other part of the to-be-indicated information is known or pre-agreed upon. For instance, the indication of specific information may be achieved by relying on the pre-agreed (e.g., as stipulated in a protocol) order of the arrangement of various pieces of information, thereby reducing the indication overhead to some extent.

The to-be-indicated information may be sent as a whole together, or may be divided into multiple pieces of sub-information for separate transmission. Moreover, the transmission periods and/or transmission occasions of these pieces of sub-information may be the same or different. The specific transmission method is not limited in this application. The transmission periods and/or transmission occasions of these pieces of sub-information may be predefined, for example, predefined according to a protocol, or may be configured by the transmitting device by sending configuration information to the receiving device. The configuration information may include, for example, but is not limited to, a combination of one or at least two of RRC signaling, medium access control (MAC) layer signaling, and physical layer signaling. The MAC layer signaling may include, for example, a MAC CE; the physical layer signaling may include, for example, downlink control information (downlink control information, DCI).

4. "Sending" and "receiving" in the embodiments of this application indicate the direction of signal transmission. In this application, when entity A sends information to entity B, it may be that A directly sends the information to B, or A indirectly sends the information to B through another entity. Similarly, when entity B receives information from entity A, it may be that entity B directly receives the information sent by entity A, or entity B indirectly receives the information sent by entity A through another entity. Here, entities A and B may be RAN nodes or terminals, or may be modules within RAN nodes or terminals. The sending and receiving of information may refer to information exchange between a RAN node and a terminal, for example, information exchange between a base station and a terminal; the sending and receiving of information may also refer to information exchange between two RAN nodes, for example, information exchange between a CU and a DU; the sending and receiving of information may further refer to information exchange between different modules within an apparatus, for example, information exchange between a terminal chip and other modules of the terminal, or information exchange between a base station chip and other modules within the base station. "Sending" may also be understood as "output" from a chip interface; for example, the baseband processor outputs information to the radio frequency chip, and "receiving" may also be understood as "input" to a chip interface.

5. In embodiments of this application, the terms "system" and "network" may be used interchangeably. "At least one" means one or more, and "a plurality of' means two or more. The term "and/or" describes an association relationship between associated objects, and indicates that three relationships may exist. For example, A and/or B may indicate the following cases: Only A exists, both A and B exist, or only B exists, where A and B may be singular or plural. The character "/" generally indicates an "or" relationship between the associated objects. "At least one of the following items (pieces)" or a similar expression thereof means any combination of these items, including any combination of a single item (piece) or a plurality of items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, and are not intended to limit an order, a time sequence, a priority, or an importance degree of the plurality of objects.

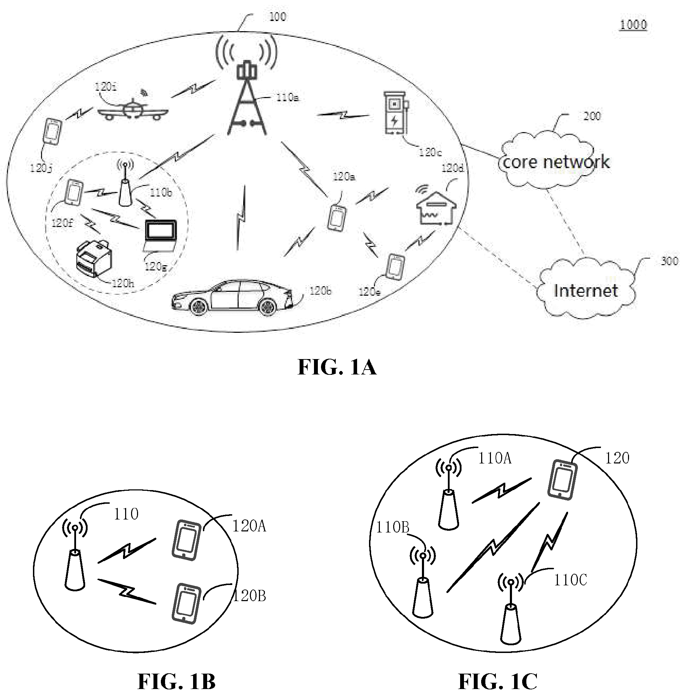

FIG. 1A is a schematic architectural diagram of a communications system 1000 to which an embodiment of this application is applied. As shown in FIG. 1A, the communications system includes a radio access network (radio access network, RAN) 100 and a core network 200. Optionally, the communications system 1000 may further include an Internet 300. The RAN 100 includes at least one RAN node (110a and 110b in FIG. 1A, collectively referred to as 110), and may further include at least one terminal (120a-120j in FIG. 1A, collectively referred to as 120). The RAN 100 may further include other RAN nodes, for example, a wireless relay device and/or a wireless backhaul device (not shown in FIG. 1A). The terminal 120 is wirelessly connected to the RAN node 110, and the RAN node 110 is connected to the core network 200 in a wireless or wired manner. The core network device in the core network 200 and the RAN node 110 in the RAN 100 may be independent and different physical devices, or may be a same physical device integrating logical functions of the core network device and logical functions of the RAN node. Terminals may be connected to each other, and RAN nodes may be connected to each other through wired or wireless connections.

RAN100 may be an evolved universal terrestrial radio access (E-UTRA) system defined in 3GPP, an NR system, or a future radio access system. RAN100 may also include two or more of the aforementioned different radio access systems. RAN100 may alternatively be an open RAN (O-RAN).

A RAN node, also referred to as a radio access network device, RAN entity, or access node, is used to assist a terminal in wirelessly accessing a communication system. In an application scenario, the RAN node may be a base station (base station), an evolved NodeB (eNodeB), a transmission reception point (TRP), a next generation NodeB (gNB) in a 5th generation (5G) mobile communication system, a next generation NodeB in a 6th generation (6G) mobile communication system, or a base station in a future mobile communication system. The RAN node may be a macro base station (such as 110a in FIG. 1A), a micro base station or an indoor station (such as 110b in FIG. 1A), or may be a relay node or a donor node.

In another application scenario, wireless access for a terminal can be facilitated through the collaboration of multiple RAN nodes, where different RAN nodes each implement some functions of a base station. For example, a RAN node may be a central unit (CU), a distributed unit (DU), or a radio unit (RU). Here, the CU performs the functions of the radio resource control (RRC) protocol and the packet data convergence protocol (PDCP) of the base station, and may also perform the functions of the service data adaptation protocol (SDAP). The DU performs the functions of the radio link control (RLC) layer and the medium access control (MAC) layer of the base station, and may also perform some or all of the functions of the physical layer. For specific descriptions of the above-mentioned protocol layers, reference may be made to relevant technical specifications of 3GPP. The RU may be used to implement the function of transmitting and receiving RF signals. The CU and DU may be two separate RAN nodes, or they may be integrated into the same RAN node, for example, integrated into a baseband unit (BBU). The RU may be included in a radio frequency device, for example, included in a remote radio unit (RRU) or an active antenna unit (AAU). The CU may be further divided into two types of RAN nodes: a CU-control plane and a CU-user plane.

In different systems, RAN nodes may have different names. For example, in an O-RAN system, the CU may be referred to as an open CU (O-CU), the DU may be referred to as an open DU (O-DU), and the RU may be referred to as an open RU (O-RU). The RAN node in the embodiments of this application may be implemented through a software module, a hardware module, or a combination of a software module and a hardware module. For instance, the RAN node may be a server loaded with a corresponding software module. This application does not limit the specific technology or the specific device form used by the RAN node.

Additionally, a RAN node may also be referred to as a network device, which is an apparatus deployed in a radio access network to provide wireless communication functions for terminal devices. The network device may include various forms of macro base stations, micro base stations (also referred to as small cells), relay stations, access points, and the like. In systems employing different radio access technologies, the name of the network device may vary, such as eNB or eNodeB (Evolutional NodeB) in Long Term Evolution (LTE). The network device may also be a radio controller in a Cloud Radio Access Network (CRAN) scenario. The network device may further be a base station device in future 5G networks or a network device in a future evolved PLMN network. The network device may also be a wearable device or a vehicle-mounted device. The network device may further be a transmission and reception point (TRP). In addition, in a certain network architecture, the network device may include a centralized unit (CU) node, a distributed unit (DU) node, or a RAN device that includes both a CU node and a DU node. For ease of description, the following uses a base station as an example of a RAN node for illustration.

The terminal is a device having a wireless transceiver function, which may send a signal to a base station or receive a signal from the base station. The terminal may also be referred to as a terminal device, user equipment (user equipment, UE), a mobile station, a mobile terminal, or the like. The terminal may be widely used in various scenarios, such as device-to-device (device-to-device, D2D), vehicle to everything (V2X) communication, machine type communication (machine-type communication, MTC), the Internet of Things (internet of things, IOT), virtual reality, augmented reality, industrial control, self-driving, telemedicine, smart grid, smart furniture, smart office, smart wearable, smart transportation, smart city, and the like. The terminal may be a mobile phone, a tablet computer, a computer with a wireless transceiver function, a wearable device, a vehicle, an airplane, a ship, a robot, an industrial robot arm, a smart home device, or the like. The embodiments of this application do not limit a specific technology or a specific device form used by the terminal.

The base station and the terminal may be fixed in position or may be movable. The base station and the terminal may be deployed on land, including indoor or outdoor, handheld or vehicle-mounted; they may also be deployed on water surfaces; or they may be deployed on aircrafts, balloons, and artificial satellites. The embodiments of this application do not limit the application scenarios of the base station and the terminal.

The roles of the base station and the terminal may be relative. For example, the helicopter or the unmanned aerial vehicle 120i in Figure 1A may be configured as a mobile base station, where the terminal 120i is a base station for the terminals 120j that access the radio access network 100 through 120i; however, for the base station 110a, 120i is a terminal, meaning that 110a and 120i communicate with each other through a wireless air interface protocol. Of course, 110a and 120i may also communicate with each other through an inter-base station interface protocol, in which case, relative to 110a, 120i is also a base station. Therefore, both the base station and the terminal may be uniformly referred to as communication devices. The 110a and 110b in Figure 1A may be referred to as communication devices with base station functions, while the 120a-120j in Figure 1A may be referred to as communication devices with terminal functions.

Communication between a base station and a terminal, between base stations, and between terminals may be performed through licensed spectrum, unlicensed spectrum, or both licensed and unlicensed spectrum simultaneously. Communication may be conducted using spectrum below 6 gigahertz (GHz), or using spectrum above 6 GHz, or alternatively, using both spectrum below 6 GHz and spectrum above 6 GHz simultaneously. The embodiments of this application do not limit the spectrum resources used for wireless communication.

In the embodiments of this application, the functions of the base station may also be performed by modules (such as chips) within the base station, or by a control subsystem that includes the functions of the base station. The control subsystem here that includes the functions of the base station may be a control center in the aforementioned application scenarios such as smart grid, industrial control, intelligent transportation, or smart city. The functions of the terminal may also be performed by modules (such as chips or modems) within the terminal, or by an apparatus that includes the functions of the terminal.

It may be understood that the RAN 100 described above includes at least one RAN node (for example, 110a and 110b in FIG. 1A, collectively referred to as 110), and may further include at least one terminal (for example, 120a to 120j in FIG. 1A, collectively referred to as 120).

In a possible implementation, the communications system shown in FIG. 1A may alternatively be as shown in FIG. 1B, that is, the communications system includes one RAN node 110 and a plurality of terminals (for example, 120A and 120B in FIG. 1B). In this case, a single RAN node may transmit data or control signaling to one or more terminals.

In another possible implementation, the communications system shown in FIG. 1A may alternatively be as shown in FIG. 1C, that is, the communications system includes a plurality of RAN nodes (for example, 110A, 110B, and 110C in FIG. 1C) 110 and one terminal 120. In this case, the plurality of RAN nodes may also simultaneously transmit data or control signaling to a single terminal.

Currently, multi-stream transmission is performed simultaneously in MIMO systems. To assist the receiver side in accurately estimating the channel or equivalent channel for each stream, multiple DMRS resources are configured to transmit DMRS for multiple ports, where the number of DMRS ports equals the number of streams. With the continuous evolution of massive MIMO, the antenna scale of both base stations and terminals is constantly increasing, leading to a continuous rise in the number of transmission streams and a growing demand for DMRS resource expansion. Therefore, how to increase the number of data streams without increasing the DMRS resource overhead is an urgent technical issue that needs to be addressed.

To address the aforementioned technical problem, this application provides a communication method and related devices, where an association relationship between a first DMRS transmitted on a first PRG and a data stream on a second PRG is indicated by using indication information. That is, the data stream on the second PRG may reuse the first DMRS on the first PRG, thereby supporting a larger number of data streams on the second PRG with lower DMRS overhead, thereby increasing the amount of data transmitted on the second PRG.

The following describes a communication method provided in the embodiments of this application. The method may be performed by a communication apparatus. Unless otherwise specifically stated, the "communication apparatus" in this application may refer to the communication apparatus itself (for example, the first device and/or the second device), or may refer to a component (for example, a processor, a chip, or a chip system) in the communication apparatus, or may also refer to a logical module or software that can implement all or a part of the functions of the communication apparatus. The first device and the second device may be the terminal devices in the communication system shown in FIG. 1A to FIG. 1C, or may be the network devices in the communication system shown in FIG. 1A to FIG. 1C. The embodiments of this application use an example in which the first device is a configuration end and the second device is a configured end for illustrative description. In actual application, the first device may also be a configured end and the second device may be a configuration end, and the specific scenario is not limited herein.

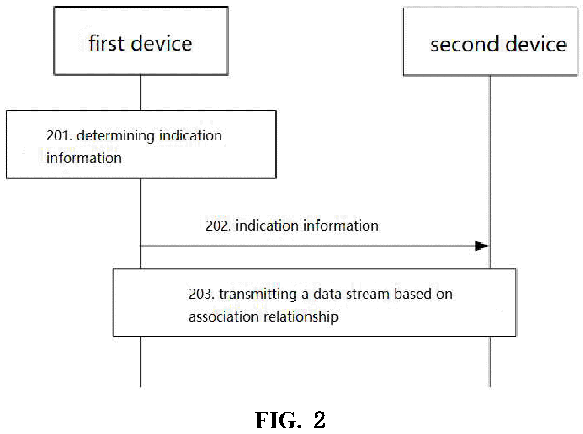

Referring to FIG. 2, FIG. 2 is a schematic flowchart of a communication method according to an embodiment of this application. The method may include steps 201 to 203. Steps 201 to 203 may be performed by a first device and/or a second device, or may be performed by some components (such as a processor, a chip, or a chip system) in the first device and/or the second device, or may be implemented by logical modules or software that can implement all or a part of the functions of the first device and/or the second device. The following provides an example of implementation where the first device and the second device perform the method. The processing performed by a single execution entity in steps 201 to 203 may also be divided into being performed by multiple execution entities, which may be logically and/or physically separated. For example, when the first device is a network device (for example, a base station), the processing performed by the first device may be divided into being performed by at least one of a CU, a DU, and an RU. The following provides a detailed description of steps 201 to 203. In this case, the first device may be understood as a configuration end, and the second device may be understood as a configured end.

Step 201: The first device determines indication information.

The first device determines the indication information, where the indication information is used to indicate an association relationship between a first DMRS transmitted on a first PRG and a data stream on a second PRG, where the first PRG and the second PRG are different PRGs.

The indication information in this embodiment of this application may also be understood as configuration information of the second device, that is, this step may be understood as a process in which the first device determines configuration information for the second device. The indication information may also be understood as indicating that the data stream on the second PRG multiplexes the DMRS on the first PRG. The indication information may also be understood as indicating an association relationship between the data stream on the second PRG and the DMRS port configured on the first PRG.

The association relationship between the first DMRS transmitted on the first PRG and the data stream on the second PRG may also be understood as that the first DMRS transmitted on the first PRG is used for channel estimation of the data stream on the second PRG.

It may be understood that the first DMRS transmitted on the first PRG also has an association relationship with the data stream transmitted on the first PRG. That is, the first DMRS transmitted on the first PRG is not only used for channel estimation of the data stream on the first PRG, but also used for channel estimation of the data stream on the second PRG.

In this embodiment of this application, a quantity of first DMRSs is not limited, that is, the first DMRS may be a single DMRS or a DMRS set (including a plurality of DMRSs).

To distinguish between the data stream transmitted on the first PRG and the data stream transmitted on the second PRG, the data stream transmitted on the first PRG is referred to as a first data stream, and the data stream transmitted on the second PRG is referred to as a second data stream below.

In this embodiment of this application, a quantity of data streams transmitted on the first PRG and the second PRG may be one or more. For example, the quantity of data streams may be 12, 24, 36, or the like. This is not specifically limited herein.

Optionally, the first PRG is configured to transmit the N first data streams and the first DMRS, and the second PRG is configured to transmit the M second data streams. The first DMRS is used for channel estimation of all or some of the N first data streams. The first DMRS is further used for channel estimation of the M second data streams, where N and M are positive integers.

Furthermore, the second PRG is further configured to transmit a second DMRS and a third data stream, where the second DMRS is used for channel estimation of the third data stream. Alternatively, it may be understood that a second data stream transmitted on the second PRG performs channel estimation by using the first DMRS transmitted on the first PRG, and a third data stream transmitted on the second PRG performs channel estimation by using the second DMRS transmitted on the second PRG.

To ensure an effect of multiplexing the first DMRS for channel estimation, the first PRG and the second PRG should be as close as possible in time domain and/or frequency domain. That is, the time domain interval between the first PRG and the second PRG is less than or equal to a first threshold, and/or the frequency domain interval between the first PRG and the second PRG is less than or equal to a second threshold.

It may be understood that, in actual application, the first PRG and the second PRG may be adjacent to each other in time domain and/or frequency domain, or may be separated by one or more PRGs.

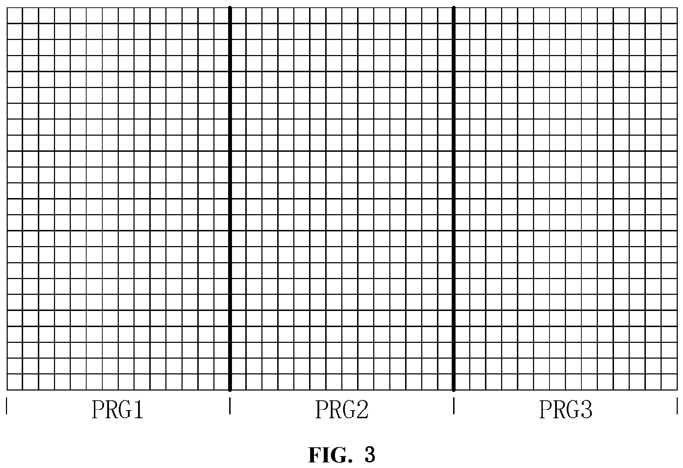

For example, PRGs sequentially arranged in time domain are shown in FIG. 3. If the first PRG and the second PRG are adjacent to each other in time domain. For example, the first PRG may be the PRG1 shown in FIG. 3, and the second PRG may be the PRG2 shown in FIG. 3. For another example, the first PRG may be the PRG2 shown in FIG. 3, and the second PRG may be the PRG3 shown in FIG. 3. If the first PRG and the second PRG are separated by one PRG in time domain. For example, the first PRG may be the PRG1 shown in FIG. 3, and the second PRG may be the PRG3 shown in FIG. 3.

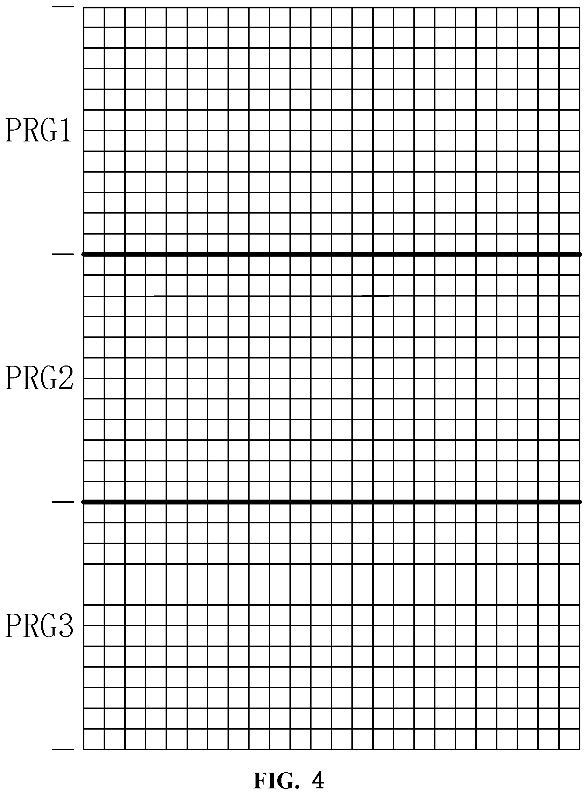

For example, PRGs sequentially arranged in frequency domain are shown in FIG. 4. If the first PRG and the second PRG are adjacent in frequency domain, for example. The first PRG may be the PRG1 shown in FIG. 4, and the second PRG may be the PRG2 shown in FIG. 4. For another example, the first PRG may be the PRG2 shown in FIG. 4, and the second PRG may be the PRG3 shown in FIG. 4. If the first PRG and the second PRG are separated by one PRG in frequency domain, for example. The first PRG may be the PRG1 shown in FIG. 4, and the second PRG may be the PRG3 shown in FIG. 4.

In a possible implementation, the first DMRS is used for channel estimation of all first data streams in the N first data streams. The first DMRS is further used for channel estimation of the M second data streams.

In another possible implementation, the first DMRS is used for channel estimation of some first data streams in the N first data streams. The first DMRS is further used for channel estimation of the M second data streams.

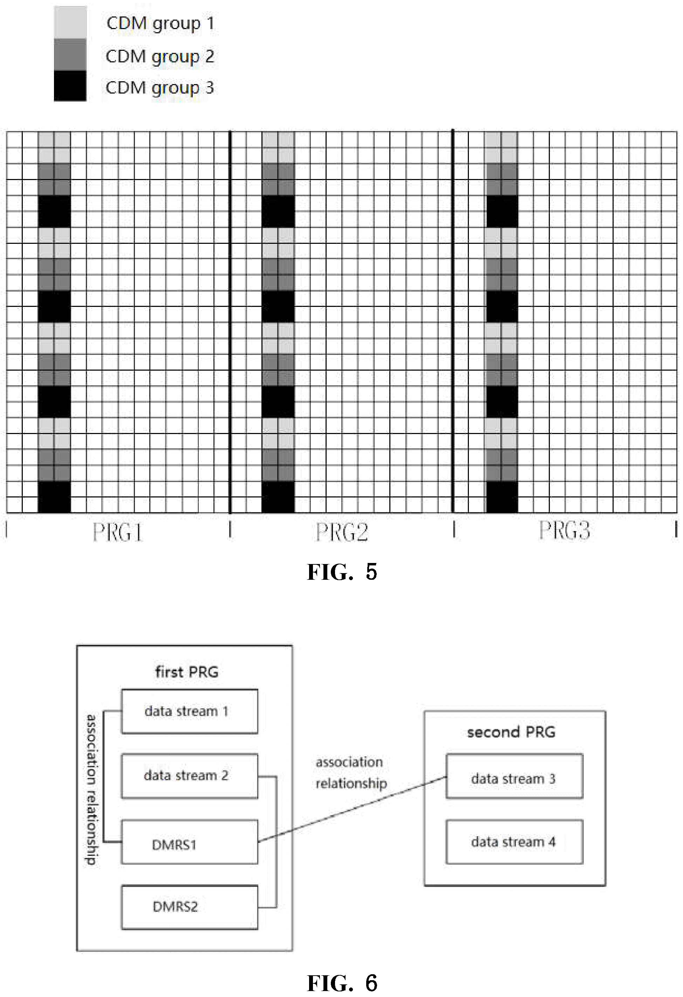

For example, as shown in FIG. 5, it is assumed that the first PRG is PRG1, the second PRG is PRG2, and each PRG is configured according to the Type-II DMRS pattern as an example. Each PRG includes three code division multiplexing (code division multiplexing, CDM) groups, and each CDM group includes four DMRS ports. That is, 12 DMRS ports are configured in each PRG, which may be used for channel estimation of 12 data streams. Specifically, the first PRG is used to transmit 12 first data streams and 12 first DMRSs. The second PRG is used to transmit 12 second data streams, 12 third data streams, and 12 second DMRSs. The 12 first DMRSs are used for channel estimation of the 12 first data streams and the 12 second data streams, and the 12 second DMRSs are used for channel estimation of the 12 third data streams.

It can be seen from the foregoing example that 12 second DMRSs do not need to be separately configured for the 12 second data streams transmitted on the second PRG, but the 12 first DMRSs transmitted on the first PRG are reused. This method can reduce DMRS overhead on the PRG2, thereby supporting a higher number of data streams. In other words, according to the existing solution, PRG1 and PRG2 can only transmit 24 (12+12) data streams, while according to this solution, PRG1 and PRG2 can transmit 36 (12+24) data streams.

The foregoing example may also be understood as scheduling 12 data streams on the PRG1 and scheduling 24 data streams (assuming sequence numbers 1 to 24) on the PRG2. Among them, the data streams 1 to 12 on the PRG2 and the 12 data streams on the PRG1 use the same DMRS for channel estimation, and the DMRS is transmitted on the PRG1. The data streams 13 to 24 on the PRG2 are equivalent to newly added data streams, and channel estimation needs to be performed by using a DMRS transmitted on the PRG2.

It should be noted that the three CDM groups corresponding to different PRGs shown in FIG. 5 may be the same or different, which is not specifically limited herein.

It may be understood that the foregoing description is performed by using an example of DMRS multiplexing between two PRGs. In an actual application, DMRS multiplexing may also be performed between three or more PRGs.

For example, an example in which the PRG includes a first PRG, a second PRG, and a third PRG is used. This may provide more multiples of data stream expansion. For example, as shown in the example in FIG. 5, the first PRG is the PRG1 in FIG. 5, the second PRG is the PRG2 in FIG. 5, and the third PRG is the PRG3 in FIG. 5.

For example, 12 data streams are scheduled on the PRG1, 24 data streams are scheduled on the PRG2 (assuming sequence numbers from 1 to 24), and 24 data streams are scheduled on the PRG3 (assuming sequence numbers from 1 to 24). Among them, the data streams 1 to 12 on the PRG2 use the same DMRS (DMRS transmitted on the PRG1) as the 12 data streams on the PRG1 for channel estimation. The data streams 13 to 24 on the PRG2 are equivalent to newly added data streams, and channel estimation needs to be performed using DMRS transmitted on the PRG2. The data streams 1 to 12 on the PRG3 use the same DMRS (DMRS transmitted on the PRG2) as the data streams 13 to 24 on the PRG2 for channel estimation. The data streams 13 to 24 on the PRG3 are equivalent to newly added data streams, and channel estimation needs to be performed using DMRS transmitted on the PRG3. This example may also be understood as a twofold capacity expansion.

In the foregoing example, the indication information may be specifically used to indicate that: the data streams 1 to 12 on the PRG2 correspond to 12 DMRS ports on the PRG1, the data streams 13 to 24 on the PRG2 correspond to 12 DMRS ports on the PRG2, the data streams 1 to 12 on the PRG3 correspond to 12 DMRS ports on the PRG2, and the data streams 13 to 24 on the PRG3 correspond to 12 DMRS ports on the PRG3.

For another example, 12 data streams are scheduled on the PRG1, 24 data streams (assuming sequence numbers 1 to 24) are scheduled on the PRG2, and 36 data streams (assuming sequence numbers 1 to 36) are scheduled on the PRG3. Among them, the data streams 1 to 12 on the PRG2 use the same DMRS (DMRS transmitted on the PRG1) as the 12 data streams on the PRG1 for channel estimation. The data streams 13 to 24 on the PRG2 are equivalent to newly added data streams, and channel estimation needs to be performed using the DMRS transmitted on the PRG2. The data streams 1 to 24 on the PRG3 use the same DMRS as the 24 data streams on the PRG2 for channel estimation (that is, the data streams 1 to 12 on the PRG3 use the DMRS transmitted on the PRG1 for channel estimation, and the data streams 13 to 24 on the PRG3 use the DMRS transmitted on the PRG2 for channel estimation). The data streams 25 to 36 on the PRG3 are equivalent to newly added data streams, and channel estimation needs to be performed using the DMRS transmitted on the PRG3. This example may also be understood as a fourfold capacity expansion.

In the foregoing example, the indication information may be specifically used to indicate that: the data streams 1 to 12 on the PRG2 correspond to the 12 DMRS ports on the PRG1, the data streams 13 to 24 on the PRG2 correspond to the 12 DMRS ports on the PRG2, the data streams 1 to 12 on the PRG3 correspond to the 12 DMRS ports on the PRG1, the data streams 13 to 24 on the PRG3 correspond to the 12 DMRS ports on the PRG2, and the data streams 25 to 36 on the PRG3 correspond to the 12 DMRS ports on the PRG3.

Optionally, when the first DMRS is a DMRS set, to improve an effect of subsequent channel estimation, parameters of data streams on different PRGs that have an association relationship with the same DMRS in the first DMRS are the same. The parameters include at least one of the following: a precoding matrix, an antenna port, an analog beam, or the like.

For example, as shown in FIG. 6, it is assumed that data stream 1, data stream 2, DMRS 1, and DMRS 2 are transmitted on the first PRG, and data stream 3 and data stream 4 are transmitted on the second PRG. In addition, the DMRS 1 on the first PRG has an association relationship not only with the data stream 1 on the first PRG, but also with the data stream 3 on the second PRG. In other words, the DMRS 1 is used for channel estimation of the data stream 1 and the data stream 3. In this case, the data stream 1 and the data stream 3 have the same parameters.

In addition, the data stream in the embodiments of this application may include an uplink data stream and/or a downlink data stream. Alternatively, it may be understood that the foregoing data stream and the DMRS may be carried on an uplink data channel and/or a downlink data channel.

Optionally, to improve a channel estimation effect in an uplink transmission scenario, the data streams transmitted by the first PRG and the second PRG are uplink data streams. Devices of data streams on different PRGs that have an association relationship with the same DMRS are a same terminal device. For example, in the example in FIG. 6, the data stream 1 and the data stream 3 are sent by a same terminal device. By limiting the devices of the data streams on the different PRGs that have an association relationship with the same DMRS to be a same terminal device, accuracy of channel estimation can be improved in an interaction scenario between a plurality of terminal devices and the network device.

Optionally, after the first device determines the indication information, the first device may perform data stream transmission with the second device based on the indication information.

Step 202: The first device sends indication information to the second device.

After determining the indication information, the first device sends the indication information to the second device. Correspondingly, the second device receives the indication information sent by the first device.

This step may be understood as a configuration process of the first device for the second device.

Optionally, the indication information is carried on a control channel. Specifically, the indication information may be at least one of the following: RRC signaling, MAC layer signaling, or physical layer signaling. The MAC layer signaling may include, for example, a MAC CE; and the physical layer signaling may include, for example, DCI.

Step 203: The first device and the second device transmit a data stream based on the association relationship.

After the first device configures the association relationship for the second device, the first device and the second device transmit a data stream based on the association relationship.

The "transmission" mentioned above may be understood in various ways. For a transmit end of the data stream, the transmission includes operations such as sending the data stream. For a receive end of the data stream, the transmission includes operations such as receiving the data stream and performing channel estimation on a channel on which the data stream is located.

In a possible implementation, the first device is a network device, and the second device is a terminal device. That is, the embodiment shown in FIG. 3 may be understood as a configuration process where the network device configures the terminal device.

When the data stream is an uplink data stream, the network device sends the indication information to the terminal device. After the terminal device receives the indication information sent by the network device, the terminal device sends the first data stream and the first DMRS to the network device through the first PRG, and sends the second data stream to the network device through the second PRG. The network device knows the relationship between the first DMRS and the second data stream. Therefore, after receiving the first DMRS and the second data stream, the network device performs channel estimation on the first data stream and the second data stream by using the first DMRS. Certainly, the terminal device may alternatively transmit the second DMRS and the third data stream on the second PRG. Correspondingly, the network device performs channel estimation on the third data stream by using the second DMRS.

When the data stream is a downlink data stream, the network device sends the indication information to the terminal device, where the network device sends the first data stream and the first DMRS to the terminal device through the first PRG, and the network device sends the second data stream to the terminal device through the second PRG. After receiving the indication information sent by the network device, the terminal device determines the association relationship between the first DMRS and the second data stream. The terminal device performs channel estimation on the first data stream and the second data stream by using the first DMRS. Certainly, the network device may also transmit the second DMRS and the third data stream on the second PRG. Correspondingly, the terminal device performs channel estimation on the third data stream by using the second DMRS.

In another possible implementation, the first device is a terminal device, and the second device is a network device. That is, the embodiment shown in FIG. 3 may be understood as a configuration process of the terminal device for the network device.

When the data stream is an uplink data stream, the terminal device sends the indication information to the network device, where the terminal device sends the first data stream and the first DMRS to the network device through the first PRG, and the terminal device sends the second data stream to the network device through the second PRG. After receiving the indication information sent by the terminal device, the network device determines the association relationship between the first DMRS and the second data stream. The network device performs channel estimation on the first data stream and the second data stream by using the first DMRS. Certainly, the terminal device may also transmit the second DMRS and the third data stream on the second PRG. Correspondingly, the network device performs channel estimation on the third data stream by using the second DMRS.

When the data stream is a downlink data stream, the terminal device sends the indication information to the network device. After receiving the indication information sent by the terminal device, the network device sends the first data stream and the first DMRS to the terminal device through the first PRG, and sends the second data stream to the terminal device through the second PRG. The terminal device knows the relationship between the first DMRS and the second data stream. Therefore, after receiving the first DMRS and the second data stream, the terminal device performs channel estimation on the first data stream and the second data stream by using the first DMRS. Certainly, the network device may alternatively transmit the second DMRS and the third data stream on the second PRG. Correspondingly, the terminal device performs channel estimation on the third data stream by using the second DMRS.

It can be understood that the foregoing merely partially describes the multiplexing of DMRSs between different PRGs. For a specific transmission situation, refer to the foregoing descriptions of each data stream and each DMRS, and details are not described herein again.

In the embodiments of this application, on one hand, the indication information indicates an association relationship between the first DMRS transmitted on the first PRG and the data stream on the second PRG. That is, the data stream on the second PRG may reuse the first DMRS on the first PRG, so that a larger quantity of data streams can be supported on the second PRG at a lower DMRS overhead, thereby increasing a data volume transmitted on the second PRG. On the other hand, by limiting the parameters of the data streams on different PRGs that have an association relationship with the same DMRS to be the same, subsequent channel estimation can be more accurate.

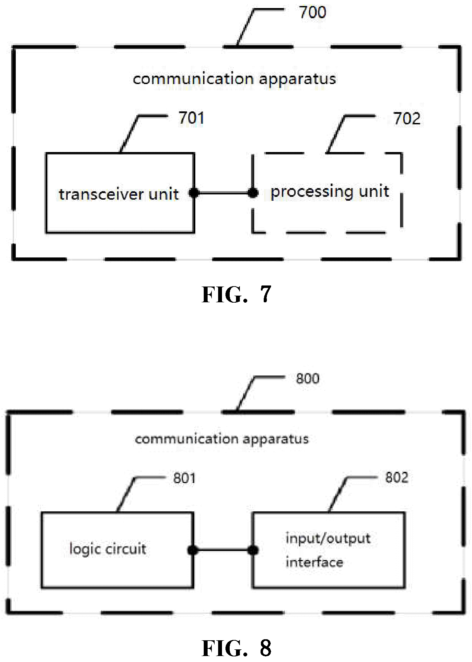

The communication method in the embodiments of this application has been described above. The following describes a communication apparatus in the embodiments of this application. Referring to FIG. 7, FIG. 7 shows an embodiment of a communication apparatus 700 according to an embodiment of this application. The communication apparatus 700 may implement a function of the first device or the second device in the foregoing method embodiments, and therefore can also achieve beneficial effects of the foregoing method embodiments. In the embodiments of this application, the communication apparatus 700 may be a communication apparatus, or may be an integrated circuit or an element (for example, a chip) inside the communication apparatus. The communication apparatus 700 includes a transceiver unit 701 and a processing unit 702. Alternatively, the communication apparatus 700 includes a transceiver unit 701.

In a possible implementation, the communication apparatus 700 is the first device in the embodiments shown in FIG. 1A to FIG. 6. In this case, functions of the units are as follows:

The processing unit 702 is configured to determine indication information, where the indication information is used to indicate an association relationship between a first demodulation reference signal DMRS transmitted on a first precoding resource block group PRG and a data stream on a second PRG, where the first PRG and the second PRG are different PRGs;

The transceiver unit 701 is configured to send the indication information.

The transceiver unit 701 is further configured to transmit the data stream based on the association relationship.

Optionally, the first PRG is used to transmit the N first data streams and the first DMRS; the second PRG is used to transmit the M second data streams; the first DMRS is used for channel estimation of all or some of the N first data streams, the first DMRS is further used for channel estimation of the M second data streams, and N and M are positive integers.

Optionally, the first DMRS further has an association relationship with a data stream on the first PRG, and parameters of data streams on different PRGs that have an association relationship with the same DMRS in the first DMRS are the same, where the parameters include at least one of the following: a precoding matrix, an antenna port, or an analog beam.

Optionally, the data streams transmitted by the first PRG and the second PRG are uplink data streams, and devices of data streams on different PRGs that have an association relationship with the same DMRS are the same terminal device.

Optionally, the second PRG is further configured to transmit a second DMRS and a third data stream, and the second DMRS is used for channel estimation of the third data stream.

Optionally, a time domain interval between the first PRG and the second PRG is less than or equal to a first threshold, and/or a frequency domain interval between the first PRG and the second PRG is less than or equal to a second threshold.

Optionally, the data stream and the first DMRS are carried on an uplink data channel and/or a downlink data channel.

In this embodiment, operations performed by the units in the communications apparatus are similar to the descriptions of the first device in the embodiments shown in FIG. 1A to FIG. 6, and details are not described herein again.

In this embodiment, on one hand, the indication information determined by the processing unit 702 indicates an association relationship between the first DMRS transmitted on the first PRG and the data stream on the second PRG. That is, the data stream on the second PRG may reuse the first DMRS on the first PRG, so that a larger quantity of data streams can be supported on the second PRG at a lower DMRS overhead, thereby increasing a data volume transmitted on the second PRG. On the other hand, by limiting the parameters of the data streams on different PRGs that have an association relationship with the same DMRS to be the same, subsequent channel estimation can be more accurate.

In another possible implementation, the communications apparatus 700 is the second device in the embodiments shown in FIG. 1A to FIG. 6. In this case, functions of the units are as follows:

The transceiver unit 701 is configured to receive indication information, where the indication information is used to indicate an association relationship between a first DMRS transmitted on a first PRG and a data stream on a second PRG, and the first PRG and the second PRG are different PRGs.

The transceiver unit 701 is further configured to transmit a data stream based on an association relationship.

Optionally, the transceiver unit 701 or the processing unit 702 is further configured to perform data stream transmission with the first device based on the indication information.

Optionally, the first PRG is used to transmit the N first data streams and the first DMRS; the second PRG is used to transmit the M second data streams; the first DMRS is used for channel estimation of all or some of the N first data streams, the first DMRS is further used for channel estimation of the M second data streams, and N and M are positive integers.

Optionally, the first DMRS further has an association relationship with the data stream on the first PRG, and parameters of data streams on different PRGs that have an association relationship with the same DMRS in the first DMRS are the same, where the parameters include at least one of the following: a precoding matrix, an antenna port, and an analog beam.

Optionally, the data streams transmitted by the first PRG and the second PRG are uplink data streams, and devices that transmits the data streams on different PRGs that have an association relationship with the same DMRS are the same terminal device.

Optionally, the second PRG is further configured to transmit a second DMRS and a third data stream, where the second DMRS is used for channel estimation of the third data stream.

Optionally, a time domain interval between the first PRG and the second PRG is less than or equal to a first threshold, and/or a frequency domain interval between the first PRG and the second PRG is less than or equal to a second threshold.

Optionally, the data stream and the first DMRS are carried on an uplink data channel and/or a downlink data channel.

In this embodiment, on one hand, the association relationship between the first DMRS transmitted on the first PRG and the data stream on the second PRG is determined based on the indication information received by the transceiver unit 701. That is, the data stream on the second PRG may reuse the first DMRS on the first PRG, so that a larger quantity of data streams can be supported on the second PRG at a lower DMRS overhead, thereby increasing a data volume transmitted on the second PRG. On the other hand, by limiting that parameters of data streams on different PRGs associated with the same DMRS are the same, subsequent channel estimation can be more accurate.

Referring to FIG. 8, it is another schematic diagram of a structure of a communication apparatus 800 according to this application. The communication apparatus 800 includes a logic circuit 801 and an input/output interface 802. The communication apparatus 800 may be a chip or an integrated circuit.

The transceiver unit 701 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit. The processing unit 702 shown in FIG. 7 may be the logic circuit 801 in FIG. 8.

Optionally, when the communication apparatus is the first device in the foregoing embodiment, the logic circuit 801 is configured to determine the indication information, and transmit a data stream with the second device based on the indication information. The input/output interface 802 is configured to send the indication information.

Optionally, when the communication apparatus is the second device in the foregoing embodiment, the input/output interface 802 is configured to receive the indication information. The logic circuit 801 is configured to transmit a data stream to the first device based on the indication information.

The logic circuit 801 and the input/output interface 802 may further perform other steps performed by the first device or the second device in any embodiment, and achieve corresponding beneficial effects. Details are not described herein again.

Optionally, the logic circuit 801 may be a processing apparatus, and functions of the processing apparatus may be partially or entirely implemented by software. Functions of the processing apparatus may be partially or entirely implemented by software.

Optionally, the processing apparatus may include a memory and a processor, where the memory is configured to store a computer program, and the processor reads and executes the computer program stored in the memory, to perform corresponding processing and/or steps in any method embodiment.

Optionally, the processing apparatus may include only a processor. The memory configured to store the computer program is located outside the processing apparatus, and the processor is connected to the memory by using a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application specific integrated circuit, ASIC), system on chips (system on chip, SoC), central processing units (central processor unit, CPU), network processors (network processor, NP), digital signal processing circuits (digital signal processor, DSP), micro controller units (micro controller unit, MCU), programmable logic devices (programmable logic device, PLD), or other integrated chips, or any combination of the foregoing chips or processors, or the like.

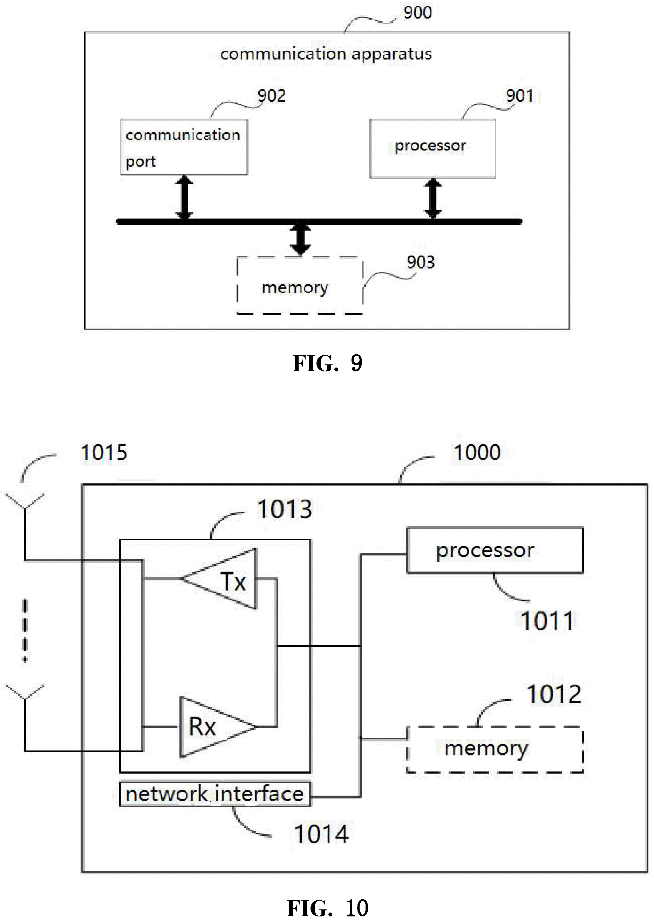

Referring to FIG. 9, there is shown a communication apparatus 900 in the foregoing embodiments according to an embodiment of this application. The communication apparatus 900 may be specifically the communication apparatus that functions as a terminal device in the foregoing embodiments.

Among them, FIG. 9 is a schematic diagram of a possible logical structure of the communication apparatus 900. The communication apparatus 900 may include but is not limited to at least one processor 901 and a communication port 902.

The transceiver unit 701 shown in FIG. 7 may be a communication interface. The communication interface may be the communication port 902 in FIG. 9, and the communication port 902 may include an input interface and an output interface. Alternatively, the communication port 902 may be a transceiver circuit, and the transceiver circuit may include an input interface circuit and an output interface circuit.

It may be understood that the communication port 902 in FIG. 9 may be configured to transmit indication information. For example, when the communication apparatus 900 is the first device in the foregoing embodiment, the communication port 902 is configured to send the indication information. For another example, when the communication apparatus 900 is the second device in the foregoing embodiment, the communication port 902 is configured to receive the indication information.

Further, optionally, the apparatus may further include at least one of the memory 903 and the bus. In the embodiments of this application, the at least one processor 901 is configured to control and process an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor 901 may implement or perform various example logical blocks, modules, and circuits described with reference to the content disclosed in this application. The processor may also be a combination of the processors that implements a computing function, for example, a combination of one or more microprocessors, or a combination of a digital signal processor and a microprocessor. It may be clearly understood by a person skilled in the art that, for the purpose of convenient and brief description, for a detailed working process of the foregoing described system, apparatus, and unit, refer to a corresponding process in the foregoing method embodiments, and details are not described herein again.

It should be noted that the communication apparatus 900 shown in FIG. 9 may be specifically configured to implement the steps performed by the terminal device in the foregoing method embodiments, and achieve the technical effects corresponding to the terminal device. For specific implementations of the communication apparatus shown in FIG. 9, refer to the descriptions in the foregoing method embodiments. Details are not described herein one by one again.

Referring to FIG. 10, FIG. 10 is a schematic structural diagram of a communication apparatus 1000 in the foregoing embodiments according to an embodiment of this application. The communication apparatus 1000 may be specifically the communication apparatus used as a network device in the foregoing embodiments. For a structure of the communication apparatus, refer to the structure shown in FIG. 10.

The communication apparatus 1000 includes at least one processor 1011 and at least one network interface 1014. Further, optionally, the communication apparatus further includes at least one memory 1012, at least one transceiver 1013, and one or more antennas 1015. The processor 1011, the memory 1012, the transceiver 1013, and the network interface 1014 are connected, for example, connected through a bus. In this embodiment of this application, the connection may include various interfaces, transmission lines, or buses, or the like, which is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or a core network device), for example, an X2 or Xn interface.

The transceiver unit 701 shown in FIG. 7 may be a communication interface, which may be the network interface 1014 in FIG. 10, and the network interface 1014 may include an input interface and an output interface. Alternatively, the network interface 1014 may also be a transceiver circuit, which may include an input interface circuit and an output interface circuit.

The processor 1011 is mainly configured to process communication protocols and communication data, control the entire communication apparatus, execute software programs, and process data of the software programs, for example, to support the communication apparatus in performing the actions described in the embodiments. The communication apparatus may include a baseband processor and a central processing unit. The baseband processor is mainly configured to process communication protocols and communication data, while the central processing unit is mainly configured to control the entire communication apparatus, execute software programs, and process data of the software programs. The processor 1011 in FIG. 10 may integrate the functions of the baseband processor and the central processing unit. A person skilled in the art may understand that the baseband processor and the central processing unit may also be independent processors interconnected through technologies such as a bus. A person skilled in the art may understand that the communication apparatus may include a plurality of baseband processors to adapt to different network standards, and the communication apparatus may include a plurality of central processing units to enhance its processing capability. The various components of the communication apparatus may be connected through various buses. The baseband processor may also be referred to as a baseband processing circuit or a baseband processing chip. The central processing unit may also be referred to as a central processing circuit or a central processing chip. The function of processing communication protocols and communication data may be built into the processor, or may be stored in a memory in the form of a software program, where the processor executes the software program to implement the baseband processing function.

The memory is mainly configured to store a software program and data. The memory 1012 may exist independently, and is connected to the processor 1011. Optionally, the memory 1012 and the processor 1011 may be integrated together, for example, integrated in a chip. The memory 1012 can store program code for executing the technical solutions in this embodiment of this application, and the processor 1011 controls execution of the program code. Various types of computer program code executed may also be considered as drivers of the processor 1011.

FIG. 10 shows only one memory and one processor. In an actual communications apparatus, there may be a plurality of processors and a plurality of memories. The memory may also be referred to as a storage medium, a storage device, or the like. The memory may be a storage element on a same chip as the processor, that is, an on-chip storage element, or an independent storage element. This is not limited in this embodiment of this application.

The transceiver 1013 may be configured to support receiving or sending of a radio frequency signal between the communications apparatus and the terminal, and the transceiver 1013 may be connected to the antenna 1015. The transceiver 1013 includes a transmitter Tx and a receiver Rx. Specifically, one or more antennas 1015 may receive a radio frequency signal, and a receiver Rx of the transceiver 1013 is configured to receive the radio frequency signal from the antenna, and convert the radio frequency signal into a digital baseband signal or a digital intermediate frequency signal. and providing the digital baseband signal or the digital intermediate frequency signal to the processor 1011, so that the processor 1011 performs further processing, for example, demodulation processing and decoding processing, on the digital baseband signal or the digital intermediate frequency signal. In addition, the transmitter Tx in the transceiver 1013 is further configured to receive a modulated digital baseband signal or a digital intermediate frequency signal from the processor 1011, and convert the modulated digital baseband signal or the digital intermediate frequency signal into a radio frequency signal. and send the radio frequency signal by using one or more antennas 1015. Specifically, the receiver Rx may selectively perform one or more levels of downmixing processing and analog-to-digital conversion processing on the radio frequency signal, to obtain a digital baseband signal or a digital intermediate frequency signal, and a sequence of the downmixing processing and the analog-to-digital conversion processing is adjustable. The transmitter Tx may selectively perform one or more levels of up-mixing processing and digital-to-analog conversion processing on a modulated digital baseband signal or a digital intermediate frequency signal to obtain a radio frequency signal. A sequence of the up-mixing processing and the digital-to-analog conversion processing is adjustable. The digital baseband signal and the digital intermediate frequency signal may be collectively referred to as a digital signal.

The transceiver 1013 may also be referred to as a transceiver unit, transceiver machine, transceiver apparatus, or the like. Optionally, the component in the transceiver unit that is configured to implement a receiving function may be considered as a receiving unit, and the component in the transceiver unit that is configured to implement a transmitting function may be considered as a transmitting unit. That is, the transceiver unit includes a receiving unit and a transmitting unit. The receiving unit may also be referred to as a receiver, input port, receiving circuit, or the like, and the transmitting unit may be referred to as a transmitter, transmitting circuit, or the like.

It should be noted that the communication apparatus 1000 shown in FIG. 10 may be specifically configured to implement the steps performed by the network device in the foregoing method embodiments and achieve the corresponding technical effects of the network device. For specific implementations of the communication apparatus 1000 shown in FIG. 10, reference may be made to the descriptions in the foregoing method embodiments, and details are not repeated herein one by one.

When the communication apparatus is a chip applied to a terminal, the terminal chip implements the functions of the terminal in the foregoing method embodiments. The terminal chip receives information from another module (such as a radio frequency module or an antenna) in the terminal, where the information is sent by a base station to the terminal; or the terminal chip sends information to another module (such as a radio frequency module or an antenna) in the terminal, where the information is sent by the terminal to the base station. For example, when the first device is a terminal, the sending of the indication information by the terminal may be understood as a process where an output of the indication information is output by the chip of the terminal.

When the aforementioned communication apparatus is a module applied to a base station, the base station module implements the functions of the base station as described in the method embodiments. The base station module receives information from other modules (such as a radio frequency module or an antenna) within the base station, where the information is sent by a terminal to the base station; or, the base station module sends information to other modules (such as a radio frequency module or an antenna) within the base station, where the information is sent by the base station to the terminal. Here, the base station module may be the baseband processor of the base station, or it may be a DU or another module, where the DU may be a DU under an open radio access network (open radio access network, O-RAN) architecture. For example, when the first device is a base station, the process of the base station sending indication information may be understood as the process where the chip of the base station outputs the indication information.

The method steps in the embodiments of this application may be implemented in hardware, or may be implemented in software instructions executable by a processor. The software instructions may include corresponding software modules, which may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example of a storage medium is coupled to a processor, enabling the processor to read information from the storage medium and write information into the storage medium. The storage medium may also be a component of the processor. The processor and the storage medium may be located in an ASIC. In addition, the ASIC may be located in a base station or a terminal. The processor and the storage medium may also exist as discrete components in a base station or a terminal.

In the foregoing embodiments, the embodiments may be implemented entirely or partially by software, hardware, firmware, or any combination thereof. When software is used to implement the embodiments, the embodiments may be implemented entirely or partially in the form of a computer program product. The computer program product includes one or more computer programs or instructions. When the computer program or the instruction is loaded and executed on a computer, the procedures or functions described in the embodiments of this application are performed entirely or partially. The computer may be a general-purpose computer, a dedicated computer, a computer network, a network device, user equipment, or another programmable apparatus. The computer program or the instruction may be stored in a computer-readable storage medium, or may be transmitted from one computer-readable storage medium to another computer-readable storage medium. For example, the computer program or the instruction may be transmitted from a website, computer, server, or data center to another website, computer, server, or data center in a wired or wireless manner. The computer-readable storage medium may be any usable medium accessible to the computer, or a data storage device, such as a server or a data center, integrating one or more usable media. The usable medium may be a magnetic medium, such as a floppy disk, a hard disk drive, or a magnetic tape; an optical medium, such as a digital video disc; or a semiconductor medium, such as a solid state disk. The computer-readable storage medium may be a volatile or a non-volatile storage medium, or may include both a volatile and a non-volatile storage medium.

In embodiments of this application, unless otherwise specified or there is a logical conflict, terms and/or descriptions in different embodiments are consistent and may be mutually referenced, and technical features in different embodiments may be combined based on an internal logical relationship thereof, to form a new embodiment.

## Claims

1. A communication method, comprising:
determining indication information, wherein the indication information is used to indicate an association relationship between a first demodulation reference signal DMRS transmitted on a first precoding resource block group PRG and a data stream on a second PRG, and the first PRG is different from the second PRG;
sending the indication information;
transmitting the data stream based on the association relationship.

2. A communication method, wherein the method comprises:
receiving indication information, wherein the indication information is used to indicate an association relationship between a first DMRS transmitted on a first PRG and a data stream on a second PRG, and the first PRG and the second PRG are different PRGs;
transmitting the data stream based on the association relationship.

3. The method according to claim 1 or 2, wherein the first PRG is used to transmit N first data streams and the first DMRS; the second PRG is used to transmit M second data streams; the first DMRS is used for channel estimation of all or a part of the N first data streams, the first DMRS is further used for channel estimation of the M second data streams, and N and M are positive integers.

4. The method according to any one of claims 1 to 3, wherein the first DMRS further has an association relationship with a data stream on the first PRG, and parameters of data streams on different PRGs that have an association relationship with the same DMRS in the first DMRS are the same, wherein the parameters comprise at least one of the following: a precoding matrix, an antenna port, or an analog beam.

5. The method according to claim 4, wherein the data streams transmitted on the first PRG and the second PRG are uplink data streams, and the data streams on different PRGs that have an association relationship with the same DMRS are of a same terminal device.

6. The method according to any one of claims 3 to 5, wherein the second PRG is further configured to transmit a second DMRS and a third data stream, and the second DMRS is used for channel estimation of the third data stream.

7. The method according to any one of claims 1 to 6, wherein a time domain interval between the first PRG and the second PRG is less than or equal to a first threshold, and/or a frequency domain interval between the first PRG and the second PRG is less than or equal to a second threshold.

8. The method according to any one of claims 1 to 7, wherein the data stream and the first DMRS are carried on an uplink data channel and/or a downlink data channel.

9. A communication apparatus, wherein the communication apparatus comprises a processing unit and a transceiver unit;
the processing unit and the transceiver unit are configured to perform the method according to any one of claims 1 to 8.

10. A communication apparatus, comprising at least one processor, wherein the at least one processor is coupled to a memory; and the at least one processor is configured to perform the method according to any one of claims 1 to 8.

11. A chip, wherein the chip is configured to perform the method according to any one of claims 1 to 8.

12. A readable storage medium, wherein the storage medium stores a computer program or instructions, and when the computer program or instructions are executed by a communication apparatus, the method according to any one of claims 1 to 8 is implemented.

13. A computer program product, comprising an instruction, wherein when the instruction is run on a computer, the computer is enabled to perform the method according to any one of claims 1 to 8.
